(19)

**Europäisches Patentamt**

**European Patent Office**

**Office européen des brevets**

(11) **EP 2 606 754 B1**

(12) # EUROPÄISCHE PATENTSCHRIFT

(45) Veröffentlichungstag und Bekanntmachung des Hinweises auf die Patenterteilung:
**03.10.2018 Patentblatt 2018/40**

(51) Int Cl.:
**G01N 22/04** (2006.01)    **A24D 3/02** (2006.01)
**A24C 5/34** (2006.01)    **G01B 15/00** (2006.01)

(21) Anmeldenummer: **12008442.1**

(22) Anmeldetag: **19.12.2012**

(54) **Verfahren zur Messung der Position von Segmenten mit absorbierenden Substanzen in Multisegmentfilterstäben der tabakverarbeitenden Industrie**

Method for measuring the position of segments with absorbing substances in multi segment filter rods in the tobacco processing industry

Procédé de mesure de la position de segments avec des substances absorbantes dans des tiges à filtre multi-segment de l'industrie de traitement du tabac

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2011 DE 102011121918**

(43) Veröffentlichungstag der Anmeldung:
**26.06.2013 Patentblatt 2013/26**

(73) Patentinhaber: **TEWS Elektronik GmbH & Co. KG**
**22459 Hamburg (DE)**

(72) Erfinder:
- **Zaage, Stefan**
  **30655 Hannover (DE)**
- **Schlemm, Udo**
  **22607 Hamburg (DE)**
- **Herrmann, Rainer**
  **20253 Hamburg (DE)**
- **Ceslik, Harald**
  **22459 Hamburg (DE)**
- **Eggers, Jörn**
  **25451 Quickborn (DE)**

(74) Vertreter: **Hauck Patentanwaltspartnerschaft mbB**
**Postfach 11 31 53**
**20431 Hamburg (DE)**

(56) Entgegenhaltungen:
EP-A1- 0 235 023    EP-A1- 0 902 277
EP-A1- 1 197 746    EP-A2- 2 207 027
WO-A1-2004/083834    WO-A1-2008/075032

CN-U- 202 548 071    DE-A1- 2 343 668
DE-A1- 2 455 271    DE-A1- 10 159 233
DE-U1- 29 711 571    US-A- 3 357 320
US-A- 6 075 882    US-A1- 2006 125 468
US-A1- 2007 091 326

- EBBE NYFORS AND PERTTI VAINIKAINEN: "INDUSTRIAL MICROWAVE SENSORS", INDUSTRIAL MICROWAVE SENSORS, XX, XX, 1. Januar 1989 (1989-01-01), XP002334964,
- "Radio Spectrum", , 1. Januar 2015 (2015-01-01), XP055180254, Gefunden im Internet: URL:http://ptolemy.eecs.berkeley.edu/eecs20/sidebars/radio/ [gefunden am 2015-03-30]
- I Bahl: "Lumped elements for RF and microwave circuits", 1. Januar 2003 (2003-01-01), Artech House, Norwood, XP055180272, ISBN: 978-1-58-053309-6 Seite 1, * Seite 1, Absatz 1 *
- DIMITRIOS VENTZAS ET AL: "Peak Searching Algorithms and Applications", SIGNAL AND IMAGE PROCESSING AND APPLICATIONS / 716: ARTIFICIAL INTELLIGENCE AND SOFT COMPUTING, 1. Januar 2011 (2011-01-01), XP055180273, Calgary,AB,Canada DOI: 10.2316/P.2011.738-049 ISBN: 978-0-88-986885-4
- DUMPALA S R ET AL: "An algorithm for the detection of peaks in biological signals", COMPUTER PROGRAMS IN BIOMEDICINE, AMSTERDAM, NL, Bd. 14, Nr. 3, 1. Juni 1982 (1982-06-01), Seiten 249-256, XP027498587, ISSN: 0010-468X, DOI: 10.1016/0010-468X(82)90030-7 [gefunden am 1982-06-01]

EP 2 606 754 B1

- JARMAN K H ET AL: "A new approach to automated peak detection", CHEMOMETRICS AND INTELLIGENT LABORATORY SYSTEMS, ELSEVIER SCIENCE PUBLISHERS B.V. AMSTERDAM, NL, Bd. 69, Nr. 1-2, 28. November 2003 (2003-11-28), Seiten 61-76, XP004469880, ISSN: 0169-7439, DOI: 10.1016/S0169-7439(03)00113-8
- Paul Voglewede: "Parabola Approximation For Peak Determination", Global DSP, 1. Mai 2004 (2004-05-01), Seiten 1-3, XP055180274, Gefunden im Internet: URL:http://www.ingelec.uns.edu.ar/pds2803/ Materiales/Articulos/AnalisisFrecuencial/G lobalDSPMay2004.pdf [gefunden am 2015-03-30]
- Knut Martin Mørken: "CHAPTER 11 Numerical Differentiation and Integration", , 1. Januar 2008 (2008-01-01), Seiten 227-269, XP055180277, Gefunden im Internet: URL:http://www.uio.no/studier/emner/matnat /math/MAT-INF1100/h08/kompendiet/diffint.p df [gefunden am 2015-03-30]
- C H Townes ET AL: "Microwave Spectroscopy", 1. Januar 1975 (1975-01-01), Dover Publications, XP055180610, ISBN: 978-0-48-661798-5 Seite 468, 474, * Seite 468 * * Seite 474 *
- A D Mccormack ET AL: "A Comparison of Granular Additives for use in Cigarette Filters", , 1. Januar 2005 (2005-01-01), Seiten 1-4, XP055180528, Gefunden im Internet: URL:http://www.essentrafilters.com/media/1 4705/2005-A-Comparison-of-Granular-Additiv es-for-Use-in-Cigarette-PDF-.pdf [gefunden am 2015-03-31]

**Beschreibung**

Die vorliegende Erfindung betrifft ein Verfahren und eine Vorrichtung zur Messung der Position von Segmenten mit einer oder mehreren absorbierenden Substanzen in Multisegmentfilterstäben in der tabakverarbeitenden Industrie.

Um den Filtereffekt von Zigarettenfiltern aus Cellulose-Acetat-Filtern effektiver und selektiver zu gestalten, werden oft Cellulose-Acetat-Filter mit Granulat aus fein verteiltem, absorbierendem Material beaufschlagt. Dazu gehört beispielsweise Aktivkohle-Granulat, das durch eine große innere Porenoberfläche vor allem unpolare Moleküle aus dem Tabakrauch absorbiert. Dazu gehören auch andere Materialien in Pulverform, wie beispielsweise fein verteilter Tabak, Silikagel oder Holzspäne, die mit in den Zigarettenfilter eingearbeitet werden. Das Granulat wird in einer Filterstabmaschine als Prozessschritt in das ausgebreitete Cellulose-Acetat eingebracht, bevor es unter Aufsprühen eines Weichmachers zur Formierung des Filterstranges kommt, der schließlich mit Papier umhüllt und in einzelne Stäbe geschnitten wird. In einer Multisegment-Filterstabmaschine werden schließlich einzelne Segmente aus unterschiedlich dotierten Filterstäben aneinandergesetzt, einschließlich reiner Cellulose-Acetat-Stäbe, so dass letztlich ein fertiges Filterelement für eine Zigarette aus zwei oder mehr Segmenten entsteht.

Die Konzentration des Granulats ist dabei nicht gleichmäßig im Filtertow verteilt. Sie hängt sowohl von der Gleichmäßigkeit der Auftragung ab, als auch von der Gleichmäßigkeit der anschließenden Kompression des Filtertows in den Filterstab, während der Stabformung im Einlauftrichter der Filterstabmaschine. Der Kompressionsgrad hängt vom Verhältnis der Geschwindigkeit des einlaufenden, ausgebreiteten Filtertows zur Geschwindigkeit des Filterstrangs ab. Es besteht somit ein großes Interesse, sowohl die Verteilung des Granulats in den einzelnen Segmenten des Filterstrangs als auch die einzelnen Positionen der Segmentkanten als Profilmessung zu erfassen und fehlerhafte Filterstäbe aus der Produktion auszuschleusen. Fehlerhaft ist ein Filterstab dann, wenn der Mittelwert an Granulat von einem vorbestimmten Sollwert zu stark abweicht, die Verteilung im Filterstab zu inhomogen ist oder die gemessenen Positionen der Segmentkanten mit den Sollwerten für die Segmentkanten nicht übereinstimmen.

Aus DE 101 59 233 A1 ist ein Verfahren zur Herstellung von Filtern für Filterzigaretten bekannt. Bei dem Verfahren wird ein Filtergranulat vor der Strangform-Vorrichtung taktweise derart aufgetragen, dass im Filterstrang granulatfreie und granulatbehaftete Zonen von vorzugsweise gleicher Länge einander abwechseln. Mit Hilfe eines Mikrowellenresonators wird der Übergang von granulatfreien zu granulatbehafteten Zonen erfasst. Bei dem bekannten Verfahren werden sowohl die Resonanzfrequenzverschiebung als auch die Verbreiterung der Resonanzkurve erfasst und ausgewertet. Aufgrund der räumlichen Ausdehnung des Messbereichs in dem Mikrowellenresonator besitzt das bekannte Verfahren eine zu schlechte Ortsauflösung, um die Übergangskante zu erfassen.

DE2455271 offenbart ein Verfahren zur Messung der Position von Abschnitten mit absorbierenden Substanzen in Multisegmentfilterstäben der tabakverarbeitenden Industrie. Dabei wird der Filterstrang durch den frequenzbestimmenden Kondensator eines Resonanzkreises geführt, der mit einem Signal konstanter Frequenz beaufschlagt wird. Mittels zweier Differenzierglieder wird die zweite Ableitung des Ausgangssignals gebildet, deren Nullstellen den Wendepunkten des Ausgangssignals entsprechen und die Segmentkanten anzeigen.

Der Erfindung liegt die Aufgabe zugrunde, ein Verfahren der eingangs beschriebenen Art bereitzustellen, das mit möglichst einfachen Mitteln eine genaue Ortsauflösung erlaubt und somit die Segmentkanten präzise erfassen kann.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren ist vorgesehen und bestimmt zur Messung der Position von Abschnitten mit einer absorbierenden Substanz in Multisegmentfilterstäben der tabakverarbeitenden Industrie. Unter absorbierenden Substanzen werden nachfolgend Substanzen verstanden, die durch ihre guten Absorptionseigenschaften in der Lage sind, aus dem Tabakrauch bestimmte Moleküle oder Molekülgruppen herauszufiltern. Wie im Falle von Aktivkohle können sie auch elektrisch leitfähig sein. Bei dem erfindungsgemäßen Verfahren wird eine zeitlich variierende Resonanzfrequenzverschiebung A und/oder Resonanzlinienverbreiterung B bei Bewegung eines Filterstabes in seiner Längsrichtung mit einem Mikrowellenresonator gemessen. Dabei weist der Mikrowellenresonator eine Feldausbreitung aus, die in Filterstrangrichtung kleiner ist als die Länge eines zu messenden Filtersegmentes. Der Mikrowellenresonator misst in an sich bekannter Weise die Verschiebung seiner Resonanzfrequenz A gegenüber seinem Leerzustand und/oder eine Vergrößerung der Halbwertsbreite der Resonanzkurve B. In einem nachfolgenden Schritt wird ein Differenzenquotient $\Delta A$ und/oder $\Delta B$ der Resonanzfrequenzverschiebungen und Resonanzkurvenverbreiterungen, bezogen auf die Längsrichtung des Filterstabes, gebildet. Der Differenzenquotient gibt an, wie sich an einem Ort oder in einem Ortsbereich die Resonanzfrequenzverschiebung, und/oder Resonanzkurvenverbreiterung mit dem Ort ändert.

Bei dem erfindungsgemäßen Verfahren werden aus den jeweiligen Differenzenquotienten die lokalen Extremwerte ermittelt. Bei der Auswertung der Resonanzfrequenzverschiebung wird also ein lokaler Extremwert von $\Delta A$ in Längsrichtung des Filterstabes bestimmt. Bei der Auswertung der Resonanzkurvenverbreiterung wird entsprechend ein lokaler Extremwert von $\Delta B$

in Längsrichtung des Filterstabes gebildet. Bei den Extremwerten handelt es sich um lokale Maxima und lokale Minima. Erfindungsgemäß erfolgt in einem nachfolgenden Schritt eine Zuordnung der lokalen Extremwerte als Position eines Übergangs von einem Abschnitt mit größerem Gehalt an absorbierenden Substanzen zu einem Abschnitt ohne oder mit geringerem Gehalt an absorbierenden Substanzen und umgekehrt. Die Erfindung beruht auf der Erkenntnis, dass die Position des Übergangs zu einem Abschnitt mit einer absorbierenden Substanz sehr genau durch die Maxima und Minima des jeweiligen Differenzenquotienten bestimmt werden kann, da die Änderung des A-, oder B-Wertes des Resonators dann am größten ist, wenn sich die Segmentkante des Multifilterstabes gerade durch das Maximum des räumlich eng begrenzten elektrischen Feldes des Mikrowellenresonators hindurchbewegt. Das erfindungsgemäße Verfahren erlaubt dabei eine Auflösung der Position des Übergangs, die deutlich kleiner als die Ortsauflösung, also die Feldkonzentrationszone, des verwendeten Mikrowellenresonators ist.

In einer bevorzugten Weiterbildung des erfindungsgemäßen Verfahrens ist eine vorbestimmte Mindestlänge für ein zu messendes Filtersegment vorgesehen. Diese Mindestlänge eines Filtersegmentes darf bevorzugt die räumliche Ausdehnung des elektrischen Feldes des Resonators in Strangrichtung nicht unterschreiten, weil sonst eine Positionsbestimmung der Segmentkanten nicht mehr möglich ist. Somit ist es vorteilhaft, den Auflösungsbereich des Resonators so klein wie möglich zu gestalten. Die Mindestlänge für die Größe der Filtersegmente dient dazu, die lokalen Extremwerte entlang der Längsrichtung des Filterstabes zu detektieren, bzw. gegebenenfalls umzuschalten von der Maximumdetektion des Differenzenquotienten auf die Minimumdetektion, infolge des Vorzeichenwechsels des Differenzenquotienten. Hierzu werden die lokalen Extremwerte als absolute Extremwerte auf der Mindestlänge ermittelt. Wenn die Mindestlänge größer als der erwartete Abstand zwischen zwei zu erfassenden Abschnitten und kleiner als der doppelte Abstand ist, dann entspricht ein absoluter Extremwert auf der Mindestlänge einem lokalen Extremwert.

Alternativ oder ergänzend ist es auch möglich, die lokalen Extremwerte des Differenzenquotienten zu ermitteln, indem Maximal- bzw. Minimalwerte vorgegeben werden, bei deren Unter- oder Überschreiten ein nachfolgender Extremwert als lokaler Extremwert des Differenzenquotienten identifiziert wird. Auch kann das Unterschreiten des vorbestimmten Minimalwerts als Hinweis genutzt werden, dass zuvor ein lokales Maximum vorgelegen haben muss und nachfolgend ein lokales Minimum zu detektieren ist. Ebenso bei Überschreiten des vorbestimmten Maximalwerts, wobei dann ein lokales Minimum vorher vorgelegen haben muss und ein lokales Maximum folgt.

In einer weiter bevorzugten Ausgestaltung wird einem Minimum des Differenzenquotienten ein Übergang von einem Bereich mit einer absorbierenden Substanz zu einem Bereich ohne absorbierende Substanz zugeordnet. Entsprechend wird bevorzugt einem Maximum des Differenzquotienten ein Übergang von einem Bereich ohne absorbierende Substanz zu einem Bereich mit absorbierender Substanz zugeordnet. Einem Übergang von einem Bereich geringerer Dichte des absorbierenden Materials zu einem Bereich größerer Dichte entspricht in der Regel einem Maximum des Differenzenquotienten, das exakt an der Übergangskante der zwei Segmente gemessen werden kann. Umgekehrt entspricht einem Übergang von einem Bereich höherer Dichte des absorbierenden Materials zu einem Bereich niedrigerer Dichte in der Regel einem Minimum des Differenzenquotienten, das wieder exakt an der Übergangskante der zwei Segmente auftritt. Indem auf die Maxima bzw. Minima des Differenzenquotienten abgestellt wird, können die Wendepunkte in der Resonanzfrequenzverschiebung A bzw. Resonanzkurvenverbreiterung B genau identifiziert werden. In den Wendepunkten ändern sich die dielektrischen Eigenschaften des gemessenen Filterstabes aufgrund der absorbierenden Substanzen, so dass der Übergang und damit die Segmentkante sehr genau erfasst werden kann. Dies bezieht sich somit nicht nur auf Segmentkanten zwischen einem Segment aus Filtertow-Material mit einer absorbierenden Substanz, sondern auch auf Kanten zwischen Segmenten mit unterschiedlichen absorbierenden Substanzen und auf Kanten zwischen Segmenten mit unterschiedlichen Dichten der gleichen absorbierenden Substanz.

Erfindungsgemäss wird in die Messwerte um den Extremwert des Differenzenquotienten eine vorbestimmte Kurve angepasst, deren Scheitelwert als Position des Übergangs bestimmt wird. Indem eine vorbestimmte Kurve, bevorzugt eine Parabel, beispielsweise durch Regression an Differenzenquotienten um den Extremwert und dessen Umgebung angelegt wird, kann die Position des Extremwertes des Differenzenquotienten sehr genau aus einer Vielzahl von Messwerten in der Umgebung des Extremwertes bestimmt werden.

Erfindungsgemäss wird zusätzlich die Masse der absorbierenden Substanz in einem Segment bestimmt, wobei der Massenwert proportional zu dem im Längsrichtung zwischen den zwei benachbarten Segmentkanten integrierten Verlaufes von A- und/oder B-Werten ist. Da die Grenzen des Abschnitts mit dem erfindungsgemäßen Verfahren sehr genau bekannt sind, kann durch die Integrationsbildung von A- und/oder B-Werten zwischen den zwei benachbarten Segmentkanten ein reproduzierbarer und präziser Messwert gewonnen werden. Dieser Integralwert zwischen zwei benachbarten Segmentkanten ist durch die absorbierende Substanz in dem Abschnitt verursacht und somit proportional zu der insgesamt in dem Abschnitt vorhandenen Masse an absorbierender Substanz.

Bevorzugt wird bei einem Filterstrang als absorbierende Substanz abschnittsweise Aktivkohle eingebracht. Der Anteil an den gemessenen Resonanzfrequenzverschiebungen, die durch Schwankungen der Dichte im Filtertow hervorgerufen wird, ist gering gegenüber der Resonanzfrequenzverschiebung, die durch die Aktivkohle hervorgerufen wird.

In einem anderen Fall wird bevorzugt bei einem Filterstrang als absorbierende Substanz abschnittsweise Silikagel eingebracht. Der Anteil an der gemessenen Resonanzkurvenverbreiterung, die durch Schwankungen der Dichte im Filtertow hervorgerufen wird, ist gering gegenüber der Resonanzkurvenverbreiterung, die durch das Silikagelgranulat hervorgerufen wird.

Bevorzugt ist die Messzone des Mikrowellenresonators in Strangsrichtung kleiner als 10 mm, wenn die zu bestimmende Segmentlänge größer oder gleich 10 mm ist. Wenn die zu bestimmenden Segmentlänger größer oder gleich 3 mm sind, kann mit einer Messzone gearbeitet werden, die in Strangrichtung kleiner als 3 mm ist.

In einer besonders bevorzugten Ausgestaltung ist der Mikrowellenresonator in einer Multisegmentfiltermaschine angeordnet. In einer solchen Maschine wird der Filterstrang durch einen Antrieb der Maschine fortbewegt. Die Position des Filterstrangs, die beispielsweise bei der Bildung des Differenzenquotienten bekannt sein muss, wird in dieser Ausgestaltung durch bevorzugt digital gepulste Signale der Multisegmentfiltermaschine gewonnen. In dieser Ausgestaltung wird also ein Mikrowellenresonator in eine Multisegmentfiltermaschine integriert, wobei die Auswerteeinrichtung ihre Positionssignale von einem oder mehreren Antrieben der Multisegmentfiltermaschine erhält.

Ebenfalls ist es möglich, den Mikrowellenresonator in einer Filterstab-Teststation anzuordnen, in der der Filterstab durch einen Schrittmotor angetrieben wird. Die Position des Filterstrangs zur Bildung des Differenzenquotienten wird bei dieser Ausgestaltung durch Signale von einem Schrittmotor der Filterstab-Teststation gemessen.

Die Erfindung wird nachfolgend anhand eines Ausführungsbeispiels näher erläutert. Es zeigt:

Fig. 1 eine Filterstabmaschine mit einem Mikrowellensensor am Filterstrang zur Positionsmessung des Granulats,

Fig. 2 beispielhafte Messwerte für die Resonanzfrequenzverschiebung an einem Filterstab und

Fig. 3 die Anpassung mit Hilfe einer Parabel zur Bestimmung des Übergangs an einem Abschnitt mit eingebrachter Aktivkohle.

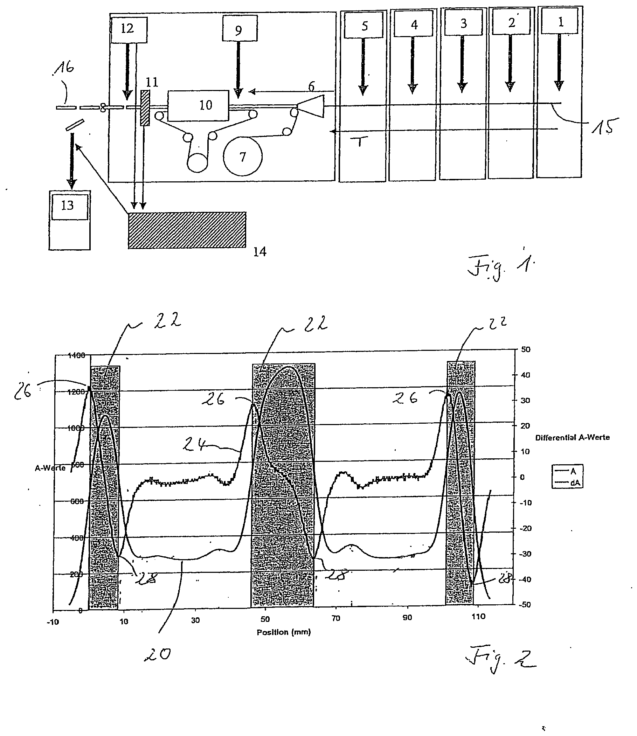

Fig. 1 zeigt in einer schematischen Ansicht eine Multifilterstab-Maschine mit einem Mikrowellenresonator 11 am Multifilterstrang zur Positionsmessung und Inhaltsbestimmung der Segmente. Eine Transportvorrichtung 15 durchläuft eine Reihe von Zugabestationen 1 bis 5. In den Zugabestationen können kontinuierlich im Dauerbetrieb oder getaktet einzelne Segmente der Transportvorrichtung 15 zugegeben werden. In einer solchen Zugabestation erfolgt beispielsweise eine abschnittsweise Zugabe von Aktivkohlesegmenten.

Der so vorbereitete Multifilterstrang wird in Richtung T transportiert und durchläuft einen Einlauftrichter 6, in dem der Multifilterstrang geformt wird. Von einer Papier-Bobine 7 wird dem Multifilterstrangstrang Papier zugeführt. In der Abgabestation 9 erfolgt eine Leimzugabe, wobei der Leim in einer Erhitzungszone 10 aushärtet. Aus der Erhitzungszone tritt ein mit Papier umhüllter Filterstrang aus, der den Mikrowellenresonator 11 durchläuft. In dem Mikrowellenresonator 11 wird eine Resonanzfrequenzverschiebung A bzw. Resonanzverbreiterung B der Resonanzkurve gegenüber dem leeren Mikrowellenresonator gemessen und die gemessenen Werte an eine Mikrowellenmesseinrichtung 14 weitergeleitet. Die Messeinrichtung 14 wertet gemäß dem erfindungsgemäßen Verfahren die Position der Abschnitte mit der absorbierenden Substanz, etwa Aktivkohle aus und steuert eine Auswurfeinrichtung 13 an, mit der fehlerhafte Filterstäbe ausgeworfen werden. Der in dem Mikrowellenresonator 11 gemessene Filterstrang wird über eine getaktet arbeitende Schneideinrichtung 12 in Filterstäbe 16 geschnitten. Bei der FilterstabMaschine gemäß Fig. 1 ist der Mikrowellenresonator hinter der Erhitzungszone 10 angeordnet und arbeitet somit on-line in der Multifilterstab-Maschine. Alternativ oder zusätzlich ist es auch möglich, einen Mikrowellenresonator 11 vorzusehen, der at-line in einer Kontrolleinheit arbeitet und an dem Multisegmentfilterstäbe probeweise gemessen werden.

Fig. 2 zeigt den Verlauf der Resonanzfrequenzverschiebung A in einem Filterstrang über eine Länge von ungefähr 110 mm. Im Bereich zwischen 0 mm und 10 mm, 45 mm und 65 mm sowie 100 mm bis 110 mm ist in grau schraffierten Bereichen 22 Aktivkohle eingebracht. Deutlich zu erkennen in Fig. 2 ist, dass die aufgenommenen Messwerte 20 für die Resonanzfrequenzverschiebung A in den Abschnitten 22 jeweils ein Maximum besitzen. Gleichzeitig ist auch zu erkennen, dass die Messwerte bereits vor den Abschnitten 22 ansteigen und auch nachfolgend zu den Abschnitten 22 langsam abfallen. Ursache hierfür ist, dass das Messfeld des Mikrowellenresonators 11 eine Ortsauflösung von ungefähr 3 mm besitzt. In Fig. 2 sind mit 24 die Differenzenquotienten der A-Werte aufgetragen. Der Differenzenquotient ΔA berechnet sich hierbei zu:

$$\Delta\mathrm{A} = \frac{A(X1) - A(X2)}{X1 - X2},$$

wobei A(X1), A(X2) die gemessene Resonanzfrequenzverschiebung A an den Positionen X1 und X2 bezeichnet. Andere Definitionen des Differenzquotienten mit zwei oder mehr Stützstellen sind möglich. Der Verlauf 24 der als Differenzenquotient ermittelten ΔA-Werte zeigt in Fig. 2 jeweils ein Maximum 26 beim Übergang von einem Bereich ohne Aktivkohle in den Bereich mit Aktivkohle und ein Minimum 28 beim Übergang aus dem Bereich mit Aktivkohle in einem Bereich ohne Aktivkohle.

Je nach der zu messenden absorbierenden Substanz in einer Segmentzone kann zur Kantenbestimmung und Inhaltsmessung die Größe A (Resonanzfrequenzverschiebung) oder die Größe B (Resonanzkurvenverbreiterung) des Mikrowellenresonators herangezogen werden. Der entsprechende Differenzenquotient der B-Werte errechnet sich anlog zu obiger Gleichung zu:

$$\Delta B = \frac{B(X1) - B(X2)}{X1 - X2}.$$

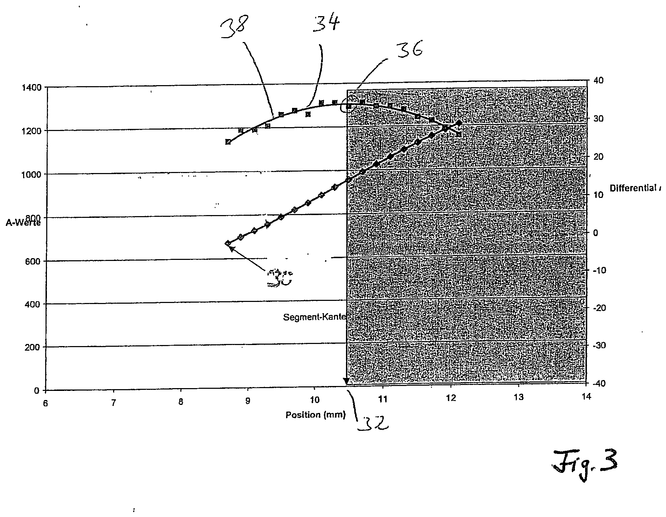

Fig. 3 zeigt in einer vergrößerten Ansicht eine Segmentkante bei 10,5 mm, die einen Übergang von einem Bereich ohne Aktivkohle (kleiner als 10, 5mm) zu einem Bereich mit Aktivkohle (größer als 10,5 mm) zeigt. Fig. 3 ist keine Vergrößerung der Messwerte aus Fig. 2, sondern ein anderes Messbeispiel an einem Filterstrang. Deutlich zu erkennen in Fig. 3 ist, dass die Resonanzfrequenzverschiebungen 30 an der Segmentkante 32 ansteigen. Die Differenzenquotienten 34 besitzen eine deutlich klarer strukturierte Kontur, die an der Segmentkante 32 ein Maximum 36 besitzt. Durch das Abstellen auf das Maximum als Extremwert kann die Position des Übergangs genauer erfasst werden.

Das Maximum 36 wird bestimmt, indem eine Parabel 38 an die Werte für die Differenzenquotienten gefittet wird, beispielsweise durch Regression. Auf diese Weise ist es möglich, aus den Mess-Signalen eines Mikrowellenresonators mit einer Feldkonzentrationszone von 3 mm Länge eine Messgenauigkeit bei Bestimmung der Segmentkante 32 von 0,2 mm oder weniger zu erreichen.

Neben der vorstehend beschriebenen Messung der Positionen der Segmentkanten werden die A-, bzw. B-Messwerte auch dazu herangezogen, die Masse der absorbierenden Substanz, wie etwa Aktivkohle, in dem jeweiligen Filterstrangsegment zu bestimmen. Durch ein Integrieren der A- oder B-Werte über die Länge des jeweiligen Segmentes, wird ein Integralwert im betreffenden Segment bestimmt. Versuche haben ergeben, dass für Aktivkohle die integrale Resonanzfrequenzverschiebung dabei unabhängig von der Granulatgröße und den unterschiedlichen Sorten der eingesetzten Aktivkohle ist. Zwar ist die Abhängigkeit der integralen Resonanzfrequenzverschiebung nicht immer linear gegenüber der Masse der Aktivkohle pro Segment, doch erlaubt die weitgehende Unabhängigkeit von Sorte und Korngröße diesen Zusammenhang einmal vorab in einer Kalibrationsmessung zu bestimmen und in einer Kennlinie festzuhalten. Eine Rekalibrierung zwischen verschiedenen Produktionsvorgängen an der Maschine ist nicht erforderlich.

**Patentansprüche**

1. Verfahren zur Messung der Position von Abschnitten mit absorbierenden Substanzen und zur Messung deren Masse in Multisegmentfilterstäben der tabakverarbeitenden Industrie, mit folgenden Verfahrensschritten:

   - Messen einer variierenden Resonanzfrequenzverschiebung A und / oder Resonanzlinienverbreiterung B bei Bewegung des Multisegmentfilterstabes in seiner Längsrichtung mit einem Mikrowellenresonator, der eine Feldkonzentration in einem Raumbereich aufweist, wobei dieser Raumbereich in Strangrichtung kleiner als die zu bestimmende Segmentlänge ist,
   - Bilden eines Differenzenquotienten ΔA der Resonanzfrequenzverschiebung A und / oder ΔB der Resonanzlinienverbreiterung B, bezogen auf die Längsrichtung,
   - Ermitteln von lokalen Extremwerten der jeweiligen Differenzenquotienten und
   - Zuordnen der lokalen Extremwerte als Position eines Übergangs von einem Abschnitt mit höherem Gehalt an absorbierender Substanz zu einem Abschnitt ohne oder mit niedrigerem Gehalt an absorbierender Substanz und umgekehrt, wobei an die lokalen Differenzenquotienten um den Extremwert herum eine vorbestimmte Kurve angepasst wird, deren Scheitelwert als Position dem Übergang zugeordnet wird, und
   - zusätzlich die Masse der absorbierenden Substanzen in einem Abschnitt bestimmt wird, wobei der Massewert proportional zu den aufintegrierten A-Werten und/oder B-Werten zwischen zwei benachbarten Übergängen ist.

2. Verfahren nach Anspruch 1, **dadurch gekennzeichnet, dass** eine vorbestimmte Mindestlänge der einzelnen Filterstabsegmente vorgesehen ist und die lokalen Extremwerte des Differenzenquotienten als absolute Extremwerte auf der Mindestlänge ermittelt werden.

3. Verfahren nach Anspruch 1 oder 2, **dadurch gekennzeichnet, dass** nach Unterschreitung eines vorbestimmten Minimalwertes des Differenzenquotienten und/oder nach Überschreiten eines vorbestimmten Maximalwertes ein nachfolgender Extremwert als lokaler Extremwert identifiziert wird.

4. Verfahren nach einem der Ansprüche 1 bis 3, **dadurch gekennzeichnet, dass** einem Maximum ein Übergang von einem Bereich ohne oder mit niedrigerem Gehalt an absorbierender Substanz zu einem Bereich mit höherem Gehalt an absorbierender Substanz zugeordnet wird.

**5.** Verfahren nach einem der Ansprüche 1 bis 3, **dadurch gekennzeichnet, dass** einem Minimum ein Übergang von einem Bereich mit höherem Gehalt an absorbierender Substanz zu einem Bereich ohne oder mit niedrigerem Gehalt an absorbierender Substanz zugeordnet wird.

**6.** Verfahren nach Anspruch 1, **dadurch gekennzeichnet, dass** eine Parabel an die Werte der Differenzenquotienten um den Extremwert herum angepasst wird.

**7.** Verfahren nach einem der Ansprüche 1 bis 6, **dadurch gekennzeichnet, dass** als absorbierende Substanz Aktivkohle abschnittsweise in dem Filterstab vorgesehen ist.

**8.** Verfahren nach einem der Ansprüche 1 bis 7, **dadurch gekennzeichnet, dass** als absorbierende Substanz Silikagel abschnittsweise in dem Filterstab vorgesehen ist.

## Claims

**1.** A method for the measurement of the position of sections containing absorbing substances and for the measurement of the mass thereof in multi-segment filter rods of the tobacco processing industry, with the following procedural steps:

> • measurement of a variable resonance frequency shift A and/or a resonance line broadening B upon movement of the multi-segment filter rod in its longitudinal direction by a microwave resonator, which has a field concentration in a spatial area, wherein this spatial area in the string direction is smaller than the segment length to be determined,
> • generation of a difference quotient $\Delta A$ of the resonance frequency shift A and/or $\Delta B$ of the resonance line broadening B with regard to the longitudinal direction,
> • detection of local extremal values of the respective difference quotients and
> • assigning the local extremal values as position of a transition from a section with a higher content of absorbing substances to a section without any or with a lower content of absorbing substances and vice versa, wherein a predetermined curve is fitted to the local difference quotients around the extremal value, whose peak value is assigned to the transition as a position, and
> • the mass of the absorbing substances in a section is determined in addition, wherein the mass value is proportional to the integrated A-values and/or B-values between two neighbouring transitions.

**2.** The method according to claim 1, **characterised in that** a predetermined minimum length of the individual filter rod segments is provided and the local extremal values of the difference quotient are determined as absolute extremal values on the minimum length.

**3.** A method according to claim 1 or 2, **characterised in that** after falling below a predetermined minimum value of the difference quotient and/or after exceeding a predetermined maximum value, a subsequent extremal value is identified as local extremal value.

**4.** A method according to any one of the claims 1 to 3, **characterised in that** a transition from an area without any or with lower content of absorbing substances to an area with a higher content of absorbing substances is assigned to a maximum.

**5.** A method according to any one of the claims 1 to 3, **characterised in that** a transition from an area with higher content of absorbing substances to an area without any or with a lower content of absorbing substances is assigned to a minimum.

**6.** The method according to claim 1, **characterised in that** a parabola is fitted to the values of the difference quotients around the extremal value.

**7.** A method according to any one of the claims 1 to 6, **characterised in that** activated carbon is provided as absorbing substance in the filter rod in sections.

**8.** A method according to any one of the claims 1 to 7, **characterised in that** silica gel is provided as absorbing substance in the filter rod in sections.

## Revendications

**1.** Procédé de mesurage de la position de sections avec substance absorbante et du mesurage de leur masse dans des tiges de filtre multi-segment de l'industrie du tabac, avec les étapes du procédé suivantes:

> • mesurage d'un décalage variable de la fréquence de résonance A et/ou d'un élargissement de ligne de résonance B chez mouvement de la tige de filtre multi-segment dans sa direction longitudinale avec un résonateur à micro-ondes, qui a une concentration de champ dans une région spatiale, cette région spatiale dans la direction du brin étant plus petite que la longueur de segment qu'il faut déterminer,
> • génération d'un quotient des différences $\Delta A$

du décalage de la fréquence de résonance A et/ou ∆B de l'élargissement de ligne de résonance B relatif à la direction longitudinale,
• détection de valeurs extrêmes locales des quotients des différences respectifs, et
• attribuer les valeurs extrêmes locales comme position d'une transition d'une section avec contenu plus grand de substance absorbante à une section sans aucun ou plus petit contenu de substance absorbante et vice versa, une courbe prédéterminée étant réajustée aux quotients des différences locales autour de la valeur extrême, dont la valeur de crête est attribuée à la transition comme position, et
• la masse de la substance absorbante dans une section est en outre déterminée, la valeur de masse étant proportionnelle à des valeurs A et/ou valeurs B intégrés entre deux transitions avoisinantes.

2. Procédé selon la revendication 1, **caractérisé en ce que** une longueur minimale prédéterminée des segments individuels de la tige de filtre est prévue et les valeurs extrêmes locales du quotient des différences sont déterminées comme des valeurs extrêmes absolues sur la longueur minimale.

3. Procédé selon la revendication 1 ou 2, **caractérisé en ce que** après une valeur minimale prédéfinie non atteinte du quotient des différences et/ou après un dépassement d'une valeur maximale prédéfinie, une valeur extrême suivante est identifiée comme valeur extrême locale.

4. Procédé selon l'une quelconque des revendications 1 à 3, **caractérisé en ce que** une transition d'une région sans aucun contenu ou avec contenu plus petit de substance absorbante à une région avec contenu plus grand de substance absorbante est attribuée à un maximum.

5. Procédé selon l'une quelconque des revendications 1 à 3, **caractérisé en ce que** une transition d'une région avec contenu plus grand de substance absorbante à une région avec sans aucun contenu ou avec contenu plus petit de substance absorbante est attribuée à un minimum.

6. Procédé selon la revendication 1, **caractérisé en ce que** une parabole est réajustée aux valeurs des quotients des différences autour de la valeur extrême.

7. Procédé selon l'une quelconque des revendications 1 à 6, **caractérisé en ce que** du charbon actif est prévu comme substance absorbante dans la tige de filtre par sections.

8. Procédé selon l'une quelconque des revendications 1 à 7, **caractérisé en ce que** du gel de silice est prévu comme substance absorbante dans la tige de filtre par sections.

Fig. 1

Fig. 2

*Fig. 3*

**IN DER BESCHREIBUNG AUFGEFÜHRTE DOKUMENTE**

**In der Beschreibung aufgeführte Patentdokumente**

- DE 10159233 A1
- DE 2455271